# DEMANDE DE BREVET EUROPEEN

(11) **EP 0 949 397 A1**
(43) Date de publication de la demande: **13.10.1999**
(21) Numéro de dépôt: 99400867.0
(22) Date de dépôt: 08.04.1999
(51) Int. Cl.: E05D 15/10, B60J 1/16

(54) **Dispositif de montage à translation d'une vitre coulissante, en particulier sur une porte de véhicule automobile**

(30) Priorité: 08.04.1998 FR 9804379
(71) Demandeur: RENAULT, 92109 Boulogne-Billancourt (FR)
(72) Inventeur: Urset, Charles, 95610 Eragny sur Oise (FR); Walho, Eddy, 78330 Fontenay le Fleury (FR); Freytrich, Jean-Pierre, 92130 Issy les Moulineaux (FR); Le Leizour, Alban, 78580 Maule (FR)

(57) **Abrégé**

Dispositif de montage d'une vitre coulissante (5) sur un châssis, comprenant des moyens (35) pour déplacer la vitre latéralement entre une position fermée et une position écartée et des moyens (11, 35) pour guider la vitre et la déplacer longitudinalement lorsqu'elle est sa position écartée. En particulier, le dispositif comprend une glissière (11) prévue sur ledit châssis, une coulisse (35) disposée dans ladite glissière et portant la vitre (5), une tête (37) pour déplacer ladite coulisse latéralement dans ladite glissière de façon à déplacer la vitre entre sa position fermée et sa positon écartée.

## Description

La présente invention concerne un dispositif de montage d'une vitre coulissante sur un châssis en particulier sur une porte d'un véhicule automobile.

On connait actuellement des systèmes de montage de vitres coulissantes de portes de véhicules automobiles dans lesquelles les bords supérieurs et inférieurs des vitres sont disposés dans des gorges de façon à pouvoir coulisser longitudinalement, une porte comprenant en général une vitre coulissante et une autre vitre soit fixe soit également coulissante, décalées transversalement l'une par rapport à l'autre.

Compte tenu en particulier de ce décalage, il peut se produire des bruits ou sifflements dûs à l'air et, en outre, de tels systèmes n'apparaissent pas très esthétiques.

Le but de la présente invention est de proposer un dispositif de montage d'une vitre coulissante de structure tout à fait différente de celles qui sont connues.

Le dispositif de montage d'une vitre coulissante sur un châssis, selon l'invention, comprend des moyens pour déplacer la vitre latéralement entre une position fermée et une position écartée et des moyens pour guider la vitre et la déplacer longitudinalement lorsqu'elle est à sa position écartée.

Selon l'invention, à sa position fermée et à sa position écartée, la vitre occupe de préférence deux positions sensiblement parallèles.

Selon une variante de l'invention, ledit châssis porte une vitre fixe dans l'alignement de laquelle s'étend ladite vitre coulissante en position fermée, ledit châssis comprenant des rainures longitudinales s'étendant de façon telle que la vitre peut, à sa position écartée, coulisser en passant devant la vitre fixe.

Selon une exécution particulière de l'invention, le dispositif comprend une glissière prévue sur ledit châssis ; une coulisse disposée dans ladite glissière et portant la vitre; des moyens pour déplacer ladite coulisse latéralement dans ladite glissière de façon à déplacer la vitre entre sa position fermée et sa positon écartée ; et des moyens de maintien latéral d'une autre partie de ladite vitre, prévus sur le châssis.

Dans une variante de l'invention, le dispositif comprend une tête de coulisse montée pivotante sur ladite coulisse et comprenant des bras susceptibles de venir respectivement en appui contre les parois opposées de ladite glissière et des moyens de manoeuvre de ladite tête, de façon à déplacer la vitre entre sa position fermée et sa positon écartée.

Selon l'invention, les bras de ladite tête porte de préférence des galets de roulement et d'appui respectifs contre les parois latérales de ladite glissière.

Selon l'invention, ladite tête de coulisse peut avantageusement être munie d'une poignée de manoeuvre.

Selon l'invention, ladite coulisse porte de préférence des galets de roulement dans ladite glissière.

Selon l'invention, l'une des parois de ladite glissère peut avantageusement comprendre une encoche susceptible de recevoir l'extrémité de l'un desdits bras de ladite tête lorsque la vitre est à sa position fermée.

Selon l'invention, le dispositif peut avantageusement comprendre des moyens de guidage de fin de course, qui comprennent une rainure longitudinale dont les parois opposées servent d'appui pour la vitre respectivement à sa position fermée et à sa position écartée et dont le fond est incliné de manière à guider la vitre vers sa position fermée, l'écartement entre lesdites parois de ladite rainure étant tel qu'à sa position fermée et à sa position écartée, la vitre occupe deux positions sensiblement parallèles.

Selon l'invention, lesdits moyens de maintien peuvent avantageusement comprendre une rainure disposée à l'opposé de ladite coulisse, l'écartement entre lesdites parois de ladite rainure étant tel qu'à sa position fermée et à sa position écartée, la vitre occupe deux positions sensiblement parallèles.

La présente invention sera mieux comprise à l'étude d'un dispositif de montage d'une vitre coulissante sur une porte de véhicule automobile, décrit à titre d'exemple non limitatif et illustré par le dessin sur lequel:
- la figure 1 représente une vue de la face intérieure d'une porte de véhicule automobile, comprenant une vitre avant fixe et une vitre arrière coulissante;
- la figure 2 représente une vue de dessus selon la flèche II de la porte de la figure 1, dans la zone de jonction de la vitre fixe de la vitre coulissante, cette dernière étant en position fermée;
- la figure 3 représente une vue de dessus correspondant à celle de la figure 2, la vitre coulissante étant en position écartée;
- la figure 4 représente une coupe verticale selon IV de la porte de la figure 1, dans la zone de la partie inférieure de la vitre fixe, la vitre coulissante étant en position écartée;
- la figure 5 représente une coupe horizontale selon V de la porte de la figure 1 dans la zone médiane de la partie arrière de la vitre coulissante, cette dernière étant représentée en traits forts en position fermée et en traits mixtes en position écartée;
- la figure 6 représente une coupe verticale selon VI de la porte de la figure 1 dans la zone de la partie supérieure de la vitre coulissante, cette dernière étant représentée en traits forts dans sa position fermée et en traits mixtes dans sa position écartée;
- et la figure 7 représente une coupe verticale selon VII de la porte de la figure 1 dans la zone de la partie supérieure de la vitre fixe, la vitre coulissante étant en position écartée.

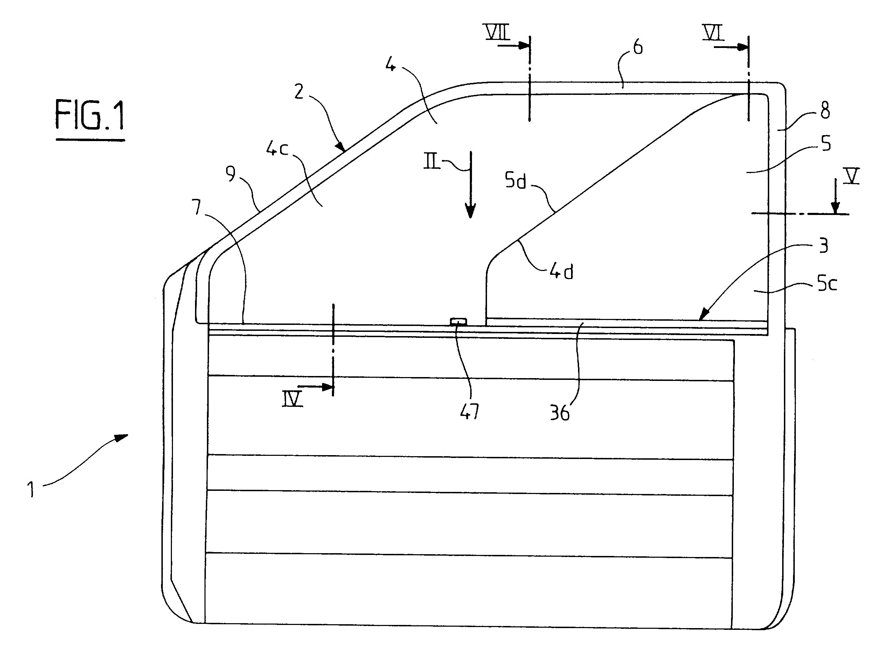

En se reportant à la figure 1, on voit qu'on a représenté une porte 1 d'un véhicule automobile qui comprend, dans sa structure, un cadre supérieur 2 destiné à recevoir un système de montage 3 d'une vitre avant fixe 4 et d'une vitre arrière coulissante 5.

Dans l'exemple, le cadre 2 se présente sensiblement sous la forme d'un trapèze qui présente un côté haut 6 et un côté bas 7 horizontaux, un côté arrière 8 vertical et un côté avant 9 incliné vers l'avant. La vitre fixe 4 couvre une partie avant de l'espace destiné par le cadre 2 et la vitre coulissante 5 couvre, en position fermée, une partie arrière complémentaire de l'espace intérieur du cadre 2.

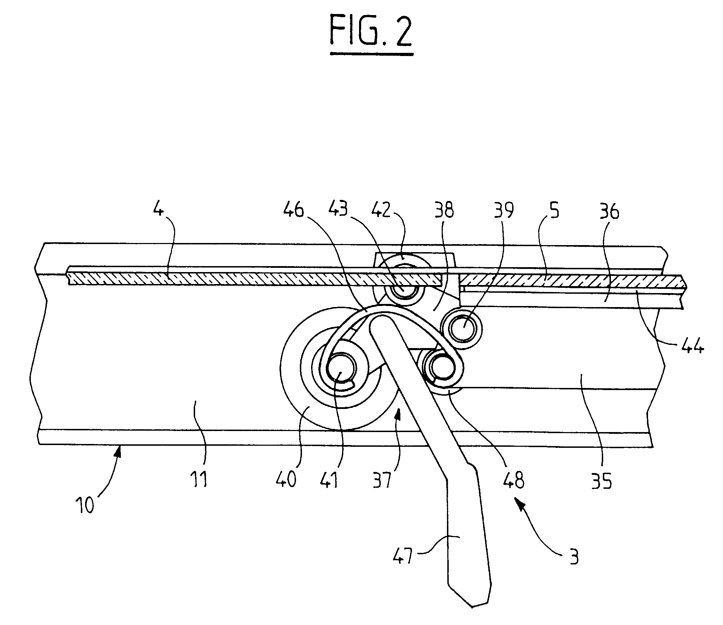

Comme on peut le voir sur les figures 2, 3 et 4, le côté inférieur 7 du cadre 2 comprend un profilé longitudinal 10 de section générale carrée, qui présente, dans sa partie supérieure, une forme en C déterminant une glissière longitudinale 11 ouverte vers le haut qui est délimitée latéralement par une paroi verticale intérieure 12, une paroi verticale médiane 13, un rebord horizontal intérieur 14 et un rebord horizontal extérieur 15, entre lesquels est formée une fente longitudinale 16 donnant accès à la glissière 11.

Le profilé 10 comprend en outre un canal longitudinal 17 qui s'étend sur le côté extérieur de la paroi intermédiaire 13.

En outre, le rebord 15 du profilé 10 comprend, sur toute sa longueur, une languette longitudinale 18 qui s'étend vers le haut.

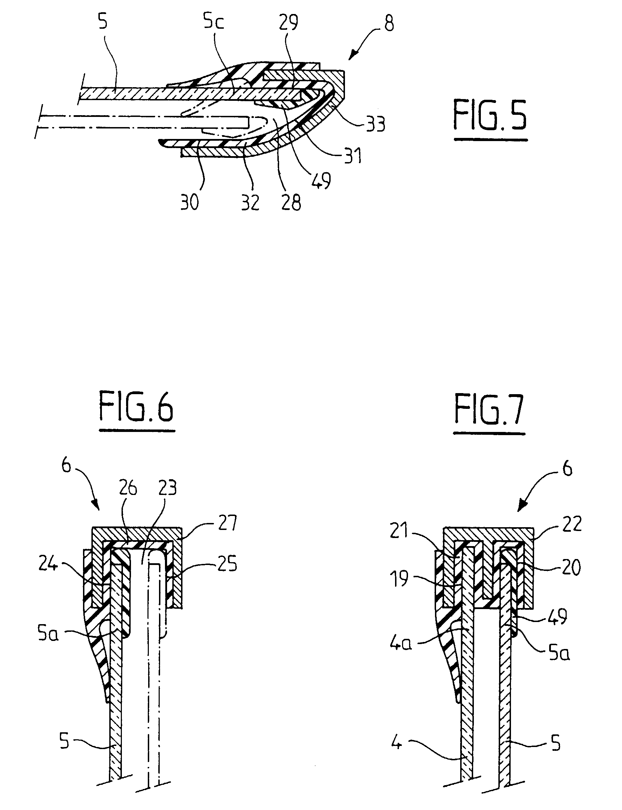

En se reportant aux figures 6 et 7, on voit que le côté supérieur 6 du cadre 2 comprend, dans la zone du bord supérieur 4a de la vitre fixe avant 4 une rainure extérieure 19 et une rainure intérieure 20 qui sont ouvertes vers le bas et parallèles. Ces rainures sont formées à l'intérieur d'un joint 21 qui est disposé à l'intérieur de deux rainures parallèles d'un profilé horizontal 22 déterminant la partie avant du côté 6 du cadre 2, ce profilé 22 étant de section en forme de U dont les branches s'étendent vers le bas.

Dans sa partie arrière, le côté supérieur 6 du cadre 2 comprend une rainure unique 23 ouverte vers le bas qui comprend une face d'appui extérieur 24 et une face d'appui intérieur 25 qui prolongent respectivement la face extérieure de la rainure 19 précitée et la face intérieure de la rainure 20 précitée. La rainure 23 est déterminée par un joint 26 de section en forme de U qui prolonge le joint 21 précité, ce joint 26 étant disposé dans un profilé 27 de section en forme de U ouvert vers le bas qui prolonge le profilé 22.

Comme on peut le voir sur la figure 5, le côté vertical arrière 8 du cadre 2 comprend une rainure 28 ouverte vers l'avant qui présente une surface d'appui extérieur 29 et une surface d'appui intérieur 30, ainsi qu'un fond incliné 31 qui va vers l'arrière et vers l'extérieur depuis la base de la surface d'appui intérieur 30 jusqu'à la base de la surface d'appui extérieur 29.

La rainure 28 est déterminée par l'intérieur d'un joint 32 de section générale en forme de U qui est disposé à l'intérieur d'un profilé vertical 33 de forme complémentaire déterminant le côté vertical 8 du cadre 2.

Comme on peut le voir en particulier sur les figures 2, 3, 4 et 7, le bord longitudinal supérieur 4a de la vitre fixe 4 est engagé dans la rainure 19 du côté supérieur 6 du cadre 2. La face extérieure du bord longitudinal inférieur 4b de la vitre fixe 4 est fixée contre la face intérieure de la languette longitudinale 18 du profilé 10, par exemple par collage par l'intermédiaire d'un joint 34, la face intérieure de la vitre fixe 4 arrivant sensiblement à fleur du bord latéral du rebord 15 délimitant la fente 16 de la glissière 11. Le bord avant 4c de la vitre fixe 4 est engagé dans une rainure, non représentée, du côté avant 9 du cadre 2.

Le dispositif de montage 3 comprend en outre une barre longitudinale constituant une coulisse 35 qui s'étend librement à l'intérieur de la glissière 11. Cette coulisse 35 présente une languette longitudinale 36 qui s'étend vers le haut.

La coulisse 35 porte, à son extrémité avant, une tête de coulisse 37 qui comprend un bras 38 qui s'étend vers l'avant dans la glissière 11.

La partie arrière du bras 38 est montée pivotante sur la partie avant de la coulisse 35 par l'intermédiaire d'un axe vertical 39. La partie avant du bras 38 porte un galet 40 monté par l'intermédiaire d'un axe vertical 41. Dans sa partie médiane, le bras 38 porte un galet intermédiaire 42 monté par l'intermédiaire d'un axe vertical 43.

Comme on peut le voir sur les figures 2 à 4, la face intérieure du bord longitudinal inférieur 5b de la vitre coulissante 5 est fixée contre la face extérieure de la languette extérieure longitudinale 36 de la coulisse 35, par exemple par collage par l'intermédiaire d'un joint 44, la coulisse 35 et sa languette 36 présentant une longueur correspondant sensiblement à la longueur de la partie inférieure de la vitre coulissante 5.

Comme on peut le voir sur les figures 2, 5 et 6, lorsque la vitre coulissante 5 est en position fermée, son bord supérieur 5a est engagé dans la rainure 23 du côté supérieur 6 du cadre 2 et est en appui contre la surface d'appui extérieur 24 de cette rainure, est engagée à fond sur la rainure 28 du côté vertical arrière 8 du cadre 2, est en appui contre la surface d'appui extérieur 29 de cette rainure 28 et est en appui contre le joint 34 porté par la face intérieure de la languette longitudinale 18 du profilé 10.

Dans cette position fermée, la vitre coulissante 5 s'étend dans l'alignement de la vitre fixe 4, le bord avant 5d de la vitre coulissante 5 s'étendant de façon adjacente au bord arrière 4d de la vitre fixe 4. De préférence, le bord arrière 4d de la vitre fixe 4 porte un joint plat non représenté, contre lequel la face extérieure du bord avant 5d de la vitre coulissante 5 vient en appui.

Dans la position fermée de la vitre coulissante 5 décrite ci-dessus, le dispositif de montage 3 est dans une position avancée vers l'extérieur.

Dans cette position avancée, le galet 40 est en appui contre la paroi intérieure 12 de la glissière 11 et le galet 42 est engagé vers l'extérieur à l'intérieur d'une encoche 45 prévue au travers de la paroi extérieure 13 de la glissière 11.

Cette position avancée du dispositif de montage 3 et la position fermée de la vitre coulissante 5 en résultant sont maintenues sous l'effet d'un ressort 46 représenté schématiquement sur le dessin.

Comme on peut le voir sur les figures 2 à 4, le bras 38 est muni d'une poignée 47 qui s'étend vers l'intérieur.

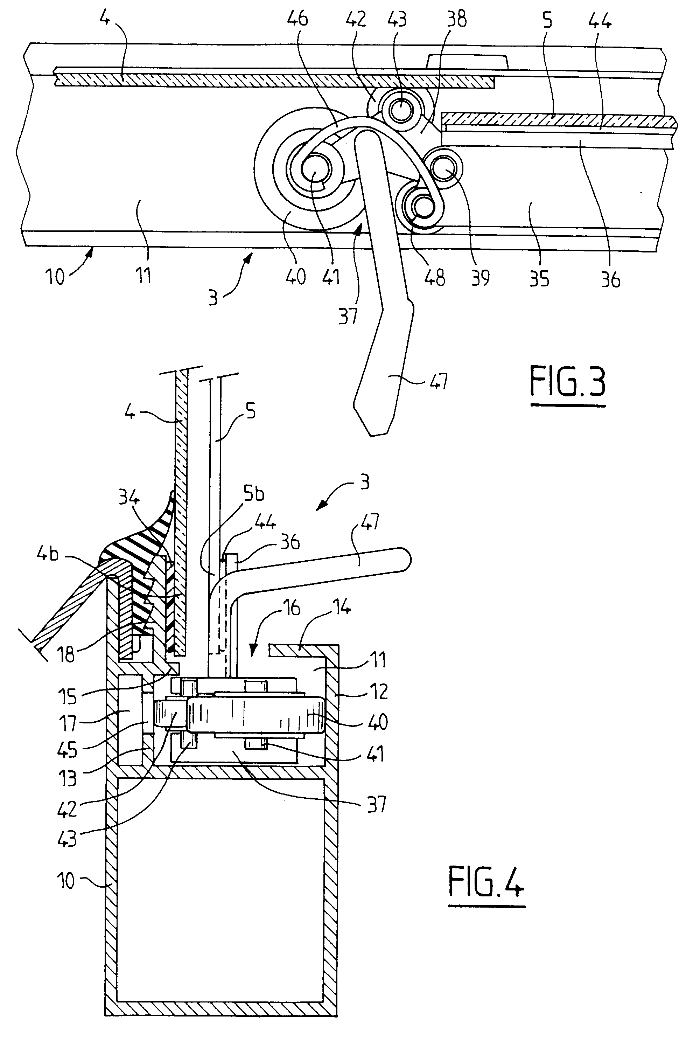

Lorsqu'on agit sur cette poignée 47 vers l'avant, on peut faire passer la vitre 5 de la position fermée décrite précédemment à une position écartée et le dispositif de montage 3 de sa position avancée à une position écartée, telles que le montrent les figures 3 à 7.

Lors de ce mouvement vers l'avant de la poignée 47, le galet 40 prend appui contre la paroi intérieure 12 de la glissière 11, le bras 38 pivote autour de l'axe 41 du galet 40 en direction de la paroi 12 de la glissière 11 et entraîne vers cette paroi 12 la coulisse 35 par l'intermédiaire de l'axe 39 autour duquel la coulisse 35 et le bras 38 pivote. Lors de ce mouvement d'écartement, lé galet 42 se dégage de l'encoche 45 de la paroi extérieure 13 de la glissière 12 pour se retrouver complètement à l'intérieur de cette dernière.

La vitre coulissante 5 et le dispositif de montage 3 se retrouvent alors dans la position représentée sur les figures 3 et 4.

A partir de cette position écartée, on peut poursuivre le mouvement vers l'avant de la poignée 47 de manière à déplacer la vitre coulissante 5 devant la vitre fixe 4 et parallèlement à cette dernière.

En effet, la vitre coulissante 5 étant amenée en appui contre la surface d'appui intérieur 25 de la rainure longitudinale 23 du côté supérieure 6 du cadre 2 comme le montre la figure 5, la partie avant du bord supérieur 5a de la vitre coulissante 5 peut s'engager dans la rainure intérieure 20 de la partie avant du côté supérieur 6 du cadre 2 et la coulisse 35 et sa tête 37 peuvent être déplacées longitudinalement dans la glissière 11.

Pour faciliter le mouvement vers l'avant, la partie avant de la coulisse 35 porte un galet 48 à axe vertical, susceptible de venir en appui contre la paroi intérieure 12 de la glissière 11. Ainsi, les galets 40 et 48 susceptibles de venir en appui contre la paroi intérieure 12 de la glissière 11 et le galet 42 susceptible de venir en appui contre la paroi extérieure 13 de la glissière 11 assurent le guidage le long de la glissière 11 de la coulisse 35, et en conséquence de la vitre coulissante 5.

Pour ramener la vitre coulissante 5 à sa position fermée, on procède de manière inverse.

Ainsi, en agissant sur la poignée 47 vers l'arrière, on ramène vers l'arrière la vitre coulissante 5. Ce faisant, le bord supérieur 5a de la vitre coulissnte 5 est ramené dans la rainure unique arrière 23 du côté supérieur 6 du cadre 2, s'engage dans la rainure 28 du côté vertical arrière 8 du cadre 2 en prenant tout d'abord appui contre sa surface d'appui intérieur 30 puis en glissant sur son fond incliné vers l'extérieur 31, et, lorsque le galet 42 de la tête 37 arrive en face de l'encoche 45, il s'engage dans cette encoche.

La vitre coulissante 5 et le dispositif de montage 3 se retrouvent alors dans leur position fermée et avancée décrite précédemment.

Pour faciliter le glissement précité, le bord arrière 5c de la vitre coulissante 5 porte un tampon vertical 49.

Bien entendu, il est souhaitable que la partie arrière de la coulisse 35 porte au moins un galet à axe vertical de manière à faciliter son mouvement longitudinal dans la glissière 11 et que la coulisse porte des tampons de glissement ou des galets susceptibles de prendre appui contre le fond et les rebords 14 et 15 de la glissière 11, les galets précités pouvant être remplacés par des tampons de glissement.

La présente invention ne se limite pas à l'exemple ci-dessus décrit. Bien des variantes de réalisation sont possibles sans sortir du cadre défini par les revendications annexées.

## Revendications

1. Dispositif de montage d'une vitre coulissante sur un châssis, caractérisé par le fait qu'il comprend des moyens (35) pour déplacer la vitre (5) latéralement entre une position fermée et une position écartée et des moyens (11, 37) pour guider la vitre et la déplacer longitudinalement lorsqu'elle est sa position écartée.

2. Dispositif selon la revendication 1, caractérisé par le fait qu'à sa position fermée et à sa position écartée, la vitre (5) occupe deux positions sensiblement parallèles.

3. Dispositif selon la revendication, caractérisé par le fait que ledit châssis (2) porte une vitre fixe (4) dans l'alignement de laquelle s'étend ladite vitre coulissante (5) en position fermée, ledit châssis (2) comprenant des rainures longitudinales (19, 20) s'étendant de façon telle que la vitre (5) peut, à sa position écartée, coulisser en passant devant la vitre fixe.

4. Dispositif selon l'une quelconque des revendications précédentes, caractérisé par le fait qu'il comprend une glissière (11) prévue sur ledit châssis ; une coulisse (35) disposée dans ladite glissière et portant la vitre (5) ; des moyens (37) pour déplacer ladite coulisse latéralement dans ladite glissière de façon à déplacer la vitre entre sa position fermée et sa positon écartée ; et des moyens de maintien latéral d'une autre partie de ladite vitre, prévus sur le châssis

5. Dispositif selon la revendication 4, caractérisé par le fait qu'il comprend une tête de coulisse (37) montée pivotante sur ladite coulisse (35) et comprenant des bras (38) susceptibles de venir respectivement en appui contre les parois opposées(12, 13) de ladite glissière et des moyens de manoeuvre (47) de ladite tête, de façon à déplacer la vitre entre sa position fermée et sa positon écartée.

6. Dispositif selon la revendication 4, caractérisé par le fait que les bras (38) de ladite tête (37) porte des galets (40, 42) de roulement et d'appui respectifs contre les parois latérales de ladite glissière.

7. Dispositif selon la revendication 5, caractérisé par le fait que ladite tête de coulisse (37) est munie d'une poignée de manoeuvre (47).

8. Dispositif selon l'une quelconque des revendications 4 à 7, caractérisé par le fait que ladite coulisse (35) porte des galets de roulement (48) dans ladite glissière.

9. Dispositif selon la revendication 5, caractérisé par le fait que l'une des parois de ladite glissère (11) comprend une encoche (45) susceptible de recevoir l'extrémité de l'un desdits bras de ladite tête lorsque la vitre est à sa position fermée.

10. Dispositif selon l'une quelconque des revendications précédentes, caractérisé par le fait qu'il comprend des moyens de guidage de fin de course, qui comprennent une rainure longitudinale (28) dont les parois opposées (29, 30) servent d'appui pour la vitre respectivement à sa position fermée et à sa position écartée et dont le fond (31) est incliné de manière à guider la vitre vers sa position fermée, l'écartement entre lesdites parois de ladite rainure étant tel qu'à sa position fermée et à sa position écartée, la vitre occupe deux positions sensiblement parallèles.

11. Dispositif selon la revendication 5, caractérisé par le fait que lesdits moyens de maintien comprennent une rainure (23) disposée à l'opposé de ladite coulisse (35), l'écartement entre lesdites parois de ladite rainure étant tel qu'à sa position fermée et à sa position écartée, la vitre occupe deux positions sensiblement parallèles.
